(19) Europäisches Patentamt
European Patent Office
Office européen des brevets

(11) **EP 3 044 559 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
*G01L 19/12* *(2006.01)* *G01F 25/00* *(2006.01)*
*G01L 27/00* *(2006.01)*

(21) Anmeldenummer: **14749851.3**

(22) Anmeldetag: **11.08.2014**

(86) Internationale Anmeldenummer:
**PCT/EP2014/067175**

(87) Internationale Veröffentlichungsnummer:
**WO 2015/036188 (19.03.2015 Gazette 2015/11)**

(54) **DURCHFLUSSMESSANORDNUNG MIT WIRKDRUCKLEITUNGEN UND VERFAHREN ZUM ERKENNEN VON VERSTOPFTEN WIRKDRUCKLEITUNGEN**

FLOW MEASURING ASSEMBLY HAVING EFFECTIVE-PRESSURE LINES AND METHOD FOR DETECTING PLUGGED EFFECTIVE-PRESSURE LINES

DISPOSITIF DE MESURE DE FLUX COMPORTANT DES CONDUITS DE PRESSION DIFFÉRENTIELLE ET PROCÉDÉ DE DÉTECTION DE CONDUITS DE PRESSION DIFFÉRENTIELLE OBSTRUÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2013 DE 102013110059**

(43) Veröffentlichungstag der Anmeldung:
**20.07.2016 Patentblatt 2016/29**

(73) Patentinhaber: **Endress+Hauser SE+Co. KG**
**79689 Maulburg (DE)**

(72) Erfinder: **PARROTTO, Davide**
**79576 Weil am Rhein (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**US-A1- 2009 097 537 US-A1- 2010 083 768**

# EP 3 044 559 B1

## Beschreibung

Die vorliegende Erfindung betrifft eine Differenzdruckmessanordnung mit Wirkdruckleitungen und ein Verfahren zum Erkennen von verstopften Wirkdruckleitungen.

Differenzdruckmessanordnungen mit Wirkdruckleitungen dienen insbesondere zur Durchflussmessung oder Filterüberwachung wobei je eine Wirkdruckleitung in Strömungsrichtung oberhalb und unterhalb eines Wirkdruckgebers, beispielsweise einer Blende oder einer Venturi Düse, oder eines Filters an eine medienführende Leitung angeschlossen sind, um den Wirkdruck mittels des Mediums zu einem Differenzdruckmesswandler der Differenzdruckmessanordnung zu übertragen. Beim Betrieb dieser Messanordnungen kann es zu Verstopfungen der Wirkdruckleitungen kommen, wodurch eine zuverlässige Messung beeinträchtigt wird. Es sind daher Bemühungen bekannt, die Verstopfung von Wirkdruckleitungen frühzeitig zu erkennen.

Das europäische Patent EP 1 840 549 B1 schützt eine Vorrichtung zum Erfassen einer Verstopfung von Wirkdruckleitungen, wobei die Vorrichtung zwei Drucksensoren zum Erfassen von Zeitreihen des statischen Drucks in jeweils einer Wirkdruckleitung und einen Differenzdrucksensor zum Erfassen von Zeitreihen der Differenz zwischen den Drücken in den beiden Wirkruckleitungen und drei Berechnungseinheiten zum Berechnen der Fluktuationen der beiden statischen Drücke und des Differenzdrucks anhand der Zeitreihen und der Quadratsummen der Fluktuationen; Korrelationskoeffizienten-Berechnungseinheiten zum Ermitteln der Korrelationskoeffizienten zwischen den Zeitreihen je eines statischen Drucks und des Differenzdrucks zu ermitteln und eine Auswertungseinheit, welche anhand der Korrelationen Verstopfungen der Wirkdruckleitungen erkennt, und identifiziert, welche der Wirkdruckleitungen verstopft ist bzw. sind.

Die Veröffentlichung US7918134 B2 offenbart eine Differenzdruckmessanordnung mit einem Differenzdruckmesswandler, der ein System zur Erkennung von verstopften Wirkdruckleitungen umfassst. Dazu wird eine Füllflüssigkeit in einer Isolationsleitung im Differenzdruckmesswandler erhitzt, und es wird bestimmt ob sich eine erwartete Veränderung des Differenzdrucksignals einstellt.

Die Veröffentlichung US8055479 B2 offenbart eine Durchflussmessanordnung mit einer Differenzdruckmessanordnung, die eine Erkennung von verstopften Wirkdruckleitungen umfasst. Dazu wird eine Standardabweichung von Differenzdruckmesswerten bestimmt und mit einem vorbestimmten Wert verglichen.

Der obige Ansatz, Fluktuationen zu analysieren, ist an sich zielführend, geht jedoch mit erheblichem Aufwand einher, da neben dem Differenzdrucksensor noch zwei zusätzliche Sensoren für den statischen Druck erforderlich sind.

Es ist daher die Aufgabe der vorliegenden Erfindung eine einfachere Differenzdruckmessanordnung und ein Verfahren bereitzustellen, welche es ermöglichen eine verstopfte Wirkdruckleitung zu erkennen und zu identifizieren. Die Aufgabe wird erfindungsgemäß gelöst durch die Durchflussmessanordnung gemäß Patentanspruch 1 und das Verfahren gemäß Patentanspruch 3.

Die erfindungsgemäße Durchflussmessanordnung umfasst eine Differenzdruckmessanordnung die einen Differenzdruckmesswandler zum Erfassen der Differenz zwischen einem ersten Mediendruck und einem zweiten Mediendruck und zum Bereitstellen eines Differenzdruckmesssignals welches von Differenz zwischen einem ersten Mediendruck und einem zweiten Mediendruck abhängt umfasst,
eine erste Wirkdruckleitung, welche an einen ersten Druckeingang des Differenzdruckmesswandlers angeschlossen ist, um den Differenzdruckmesswandler mit dem ersten Mediendruck zu beaufschlagen;
eine zweite Wirkdruckleitung, welche an einen zweiten Druckeingang des Differenzdruckmesswandlers angeschlossen ist um den Differenzdruckmesswandler mit dem zweiten Mediendruck zu beaufschlagen;
mindestens einen Temperatursensor zum Ausgeben eines Temperatursignals welches mit einer Temperatur der Wirkdruckleitungen korreliert; und
eine Verarbeitungseinheit zum Verarbeiten des Differenzdruckmesssignals und des Temperatursignals;
wobei die Verarbeitungseinheit dazu eingerichtet ist, anhand des Differenzdruckmesssignals und des Temperatursignals eine Korrelation zwischen einer Veränderung des Temperatursignals und dem Differenzdrucksignal festzustellen, und die Feststellung einer Korrelation als Hinweis auf eine verstopfte Wirkdruckleitung zu werten.

Die Erfindung geht von der Überlegung aus, dass in einer Wirkdruckleitung zwischen einem Druckeingang des Differenzdruckmesswandlers und einer Verstopfung ein Medium eingeschlossen sein kann, welches sich bei einer Erwärmung ausdehnt, so dass es über die Verstopfung, welche eine Drossel bildet, abfließen muss. Dies führt zu einem Druckanstieg in der verstopften Wirkdruckleitung der sich auf den zu messenden Differenzdruck auswirkt.

Erfindungsgemäß ist die Auswerteeinrichtung dazu eingerichtet, eine positive Korrelation zwischen einer Temperatursignaländerung einerseits, die einem Temperaturanstieg entspricht, und dem Differenzdrucksignal andererseits, als Indiz für eine Verstopfung der ersten Wirkdruckleitung zu werten.

In einer Weiterbildung der Erfindung ist die Auswerteeinrichtung dazu eingerichtet, eine negative Korrelation zwischen einer Temperatursignaländerung einerseits, die einem Temperaturanstieg entspricht, und dem Differenzdrucksignal andererseits, als Indiz für eine Verstopfung der zweiten Wirkdruckleitung zu werten.

Umgekehrtes gilt entsprechend bei einer Temperatursignaländerung die einem Temperaturabfall entspricht.

Erfindungsgemäß ist die Auswertungseinheit weiterhin dazu eingerichtet, zumindest einen charakteristischen Parameter eines Rauschens oder einer Fluktuation des Differenzdruckmesssignals zu ermitteln, und diesen Parameter bei der Feststellung einer verstopften Wirkdruckleitung zu berücksichtigen.

Die erfindungsgemäße Durchflussmessanordnung, umfasst eine Differenzdruckmessanordnung, wobei die Differenz zwischen dem ersten Mediendruck und dem zweiten Mediendruck ein Maß für den Durchfluss ist, wobei die Auswertungseinheit weiterhin dazu eingerichtet ist, eine Korrelation zwischen dem charakteristischen Parameter eines Rauschens bzw. einer Fluktuation und dem Durchfluss bzw. der Amplitude des Differenzdruckmesssignals bei der Feststellung einer verstopften Wirkdruckleitung zu berücksichtigen.

Die Erfindung betrifft weiterhin ein Verfahren zum Überwachen einer Durchflussmessanordnung, welche eine Differenzdruckmessanordnung aufweist, welche einen Differenzdruckmesswandler zum Erfassen einer Differenz zwischen einem ersten Mediendruck und einem zweiten Mediendruck und zum Bereitstellen eines Differenzdruckmesssignals welches von Differenz zwischen einem ersten Mediendruck und einem zweiten Mediendruck abhängt; eine erste Wirkdruckleitung, welche an einen ersten Druckeingang des Differenzdruckmesswandlers angeschlossen ist, um den Differenzdruckmesswandler mit dem ersten Mediendruck zu beaufschlagen; eine zweite Wirkdruckleitung, welche an einen zweiten Druckeingang des Differenzdruckmesswandlers angeschlossen ist um den Differenzdruckmesswandler mit dem zweiten Mediendruck zu beaufschlagen; und mindestens einen Temperatursensor zum Ausgeben eines Temperatursignals welches mit einer Temperatur der Wirkdruckleitungen korreliert aufweist, wobei das Verfahren erfindungsgemäß zumindest das zeitweise Erfassen eines zeitlichen Verlaufs des Temperatursignals und des Differenzdruckmesssignals, und das Überprüfen, ob eine signifikante Korrelation zwischen einer Veränderung des Temperatursignals und dem Differenzdrucksignal festzustellen ist, die als Hinweis auf eine verstopfte Wirkdruckleitung zu werten ist, umfasst.

Erfindungsgemäß umfasst das Verfahren weiterhin eine Analyse eines Rauchens oder einer Fluktuation des Differenzdruckmesssignals, und die Überprüfung ob das Rauschen oder die Fluktuation auf eine verstopfte Wirkdruckleitung hinweisen.

Erfindungsgemäß wird eine verstopfte Wirkdruckleitung signalisiert, wenn das Rauschen oder die Fluktuation auf eine verstopfte Wirkdruckleitung hinweisen, wobei anhand einer signifikanten Korrelation zwischen einer Veränderung des Temperatursignals und dem Differenzdrucksignal, identifiziert wird, welche Wirkdruckleitung verstopft ist.

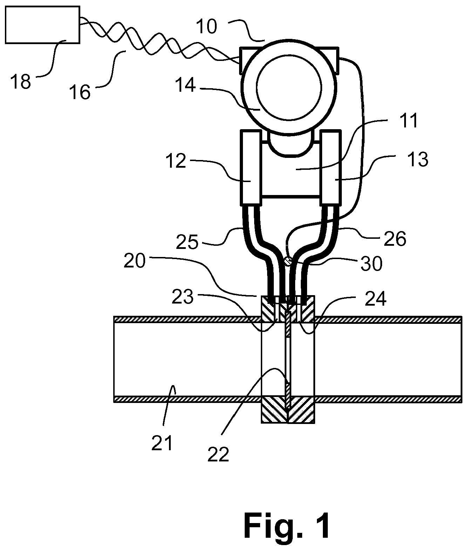

Das in Fig. 1 dargestellte Ausführungsbeispiel einer Differenzdruckmessanordnung umfasst einen Differenzdruckmessumformer 10, welcher ein Sensormodul 11, das zwischen einem ersten, hochdruckseitigen Prozessanschlussflansch 12 und einem zweiten, niederdruckseitigen Prozessanschlussflansch 13 angeordnet ist, und ein Elektronikmodul 14 aufweist, das von dem Sensormodul 11 gehalten wird, das Sensormodul mit Energie versorgt und Signale der Sensormoduls verarbeitet. Das Elektronikmodul ist über eine Zweidrahtleitung 16 an ein Prozessleitsystem 18 angeschlossen, wobei das Elektronikmodul 14 über die Zweidrahtleitung kommuniziert und mit Energie versorgt wird. Die Zweidrahtleitung kann insbesondere als Feldbus nach dem Profibus- bzw. Foundation Fieldus-Standard oder nach dem HART-Standard betrieben werden. Derartige Differenzdruckmessumformer sind an sich bekannt und werden beispielsweise unter der Marke Deltabar von der Anmelderin hergestellt und in Verkehr gebracht. Die Differenzdruckmessanordnung umfasst weiterhin einen Wirkdruckgeber 20 zum Einbau in eine Rohrleitung 21. Der Wirkdruckgeber umfasst eine Blende 22, einen ersten Druckabgriffkanal 23 auf einer Hochdruckseite der Blende 22 und einen zweiten Druckabgriffkanal 24 auf einer Niederdruckseite der Blende 22. Der hochdruckseitige Prozessanschlussflansch 12 ist über eine hochdruckseitige Wirkdruckleitung 25 an den hochdruckseitigen Druckabgriffkanal 23 angeschlossen, und der niederdruckseitige Prozessanschlussflansch ist über eine niederdruckseitige Wirkdruckleitung 26 an den niederdruckseitigen Druckabgriffkanal 24 angeschlossen. Die Begriffe "hochdruckseitig" und "niederdruckseitig" beziehen sich auf eine durch einen Durchfluss (in der Zeichnung von links nach rechts) erzeugte Druckdifferenz, wobei diese proportional zum Quadrat der Durchflussgeschwindigkeit ist und beispielsweise in der Größenordnung von einigen 10 bis 100 mbar beträgt. Der statische Druck, dem diese durchflussabhängige Druckdifferenz überlagert ist, kann beispielsweise von 1 bar bis zu einigen 100 bar betragen.

Die Druckdifferenz wird mit einem Sensorelement des Sensormoduls 11 erfasst, wobei das Sensormodul ein von der erfassten Druckdifferenz abhängiges Sensormodulsignal an das Elektronikmodul 14 ausgibt, wobei die Verarbeitungsschaltung des Elektronikmoduls 14 anhand des Sensormodulsignals ein die Druckdifferenz repräsentierendes Differenzdruckmesssignal generiert und über die Zweidrahtleitung 16 an das Prozessleitsystem 18 ausgibt.

Zeitreihen des Differenzdruckmesssignals und/oder von Fluktuationen des Differenzdruckmesssignals können in einem Datenspeicher des Elektronikmoduls und/oder im Prozessleitsystem gespeichert werden.

Weiterhin weist die Differenzdruckmessanordnung einen Temperatursensor 30., welcher eine Temperatur der Wirkdruckleitungen erfasst. Sofern davon auszugehen ist, dass die Temperatur der Wirkdruckleitungen im Wesentlichen gleich ist, reicht ein Temperatursensor aus, wenn dagegen stark abweichende Temperaturverläufe zu erwarten sind, kann es vorteilhaft sein, jeweils einen Temperatursensor für eine Wirkdruckleitung vorzusehen. Der Temperatursensor 30 ist an das Elektronikmodul 14 angeschlossen, und stellt diesem Temperaturmesssignale bereit, die jeweils eine aktuell gemessene Temperatur repräsentieren. Von den Temperaturmesssignalen bzw. deren Fluktuationen können Zeitreihen im Messumformer und/oder im Leitsystem gespeichert werden.

Anhand der Zeitreihen der Differenzdruckmesssignale und der Temperaturmesswerte bzw. der entsprechenden Fluktuationen wird festgestellt, ob eine Wirkdruckleitung verstopft ist und, wenn ja, welche.

Wie aus dem Stand der Technik bekannt, kann durch eine Analyse der Fluktuationen bzw. des Rauschens des Differenzdruckmesssignals eine Verstopfung der Wirkdruckleitungen erkannt werden. Grundsätzlich kann die vorliegende Erfindung an beliebige der Fluktuationsanalysen anknüpfen, wie folgt: Zeitreihen der Differenzdruckmesssignale werden über einen längeren Zeitraum von mehreren Stunden, beispielsweise 8 bis 16 Stunden hinsichtlich ihrer Fluktuation bzw. ihres Rauschens und ihrer Korrelation mit der entsprechenden Zeitreihe der Temperaturmesswerte ausgewertet, wobei insbesondere bei der Analyse der Fluktuation bzw. des Rauschens ein Vergleich mit Referenzdaten, die in einem Referenzzustand der Anlage erfasst worden sind, vorteilhaft ist.

Grundsätzlich ist davon auszugehen, dass Fluktuationen bzw. Rauschen des Drucks in einem strömenden Medium mit zunehmender Fließgeschwindigkeit des Mediums größer werden. Bei einer intakten Durchflussmessanordnung werden diese Fluktuationen aber über beide Wirkdruckleitungen zum Differenzdruckmessumformer gelangen, und sich dort gegenseitig zu einem gewissen Grad kompensieren.

Wenn nun eine Wirkdruckleitung zu verstopfen, wird mit der Zeit diese Kompensation schwächer werden, so dass die Fluktuationen bzw. das Rauschen des Differenzdruckmesssignals zunehmen. Hierbei geht es insbesondere um Fluktuationen in einem Frequenzbereich von mehr als 1 Hz, insbesondere mehr als 10 Hz bzw. mehr als 100 Hz.

Wenn also bei einem gegebenen Durchfluss bzw. mittleren Differenzdruck die Fluktuation des Differenzdruckmesssignals im Vergleich zu Referenzdaten, die bei offenen Wirkdruckleitungen erfasst wurden, zugenommen hat, ist dies ein erstes Indiz für eine ganz oder teilweise verstopfte Referenzdruckleitung.

Die Erfindung trägt nun dazu bei, Fehldiagnosen einer verstopften Wirkdruckleitung aufgrund zunehmender Fluktuationen des Differenzdruckmesssignals zu vermeiden.

Die Wahrscheinlichkeit einer Verstopfung bei einer festgestellten Zunahme der Fluktuation P(V|F+) ist gegeben als:

$$P(V|F+) = P(F+|V)*P(V)/[P(F+|V)*P(V)+P(F+|Frei)*P(Frei)] \qquad (1)$$

Hierbei sind: P(F+|V) die Wahrscheinlichkeit, dass bei einer Verstopfung eine zunehmende Fluktuation detektiert wird, P(V) die Wahrscheinlichkeit, dass eine Wirkdruckleitung verstopft, P(F+|Frei) die Wahrscheinlichkeit, dass bei einer freien Wirkdruckleitung eine Zunahme des Fluktuationen detektiert wird, und P(Frei) die Wahrscheinlichkeit, dass eine Wirkdruckleitung frei bleibt.

Geht man zum Zwecke der Erläuterung davon aus, dass 2% aller Wirkdruckleitungen wegen Verstopfung ausfallen, wobei eine verstopfte Wirkdruckleitung mit einer Wahrscheinlichkeit von 99% zur Detektion einer Zunahme der Fluktuationen führt, und nimmt man weiterhin, dass eine freie Wirkdruckleitung mit einer Wahrscheinlichkeit von nur 4% zur Feststellung einer erhöhten Fluktuation führen, dann ist die Wahrscheinlichkeit einer Verstopfung bei einer festgestellten Zunahme der Fluktuation P(V|F+) nach Gleichung 1 lediglich ein Drittel.

Dies ist keine komfortable Situation für den Betreiber einer Prozessanlage, der anhand des Befundes zu entscheiden hat, ob die Anlage angehalten und gewartet werden soll, denn zwei von drei Wartungsmaßnahmen würden überflüssig sein.

Durch die Analyse einer Korrelation zwischen einer Änderung des Temperaturmesssignals und dem Differenzdruckmesssignal ist nun ein unabhängiger Ansatz zum Feststellen einer Verstopfung gegeben, denn wenn aufgrund einer Verstopfung ein Medium in einer Wirkdruckleitung eingeschlossen ist, so bewirkt eine Temperaturänderung und eine damit einhergehenden Volumenänderung des Mediums eine Druckänderung in der Wirkdruckleitung, die sich unmittelbar auf den gemessenen Differenzdruck auswirkt. Wenn die Verstopfung noch nicht vollständig ist, so muss bei einer Temperaturänderung Medium über die entstehende Verstopfung, die als Drossel wirkt, zum Volumenausgleich zu- oder abfließen. Auch dies bewirkt in der betroffenen Wirkdruckleitung eine Druckänderung, die sich auf das Differenzdruckmesssignal auswirkt.

Eine Korrelation zwischen einer Änderung des Temperaturmesssignals und dem Differenzdruckmesssignal ist daher ein von der Fluktuationsanalyse des Differenzdruckmesssignals unabhängiges Indiz für eine Verstopfung. Durch Kombination der beiden vorgenannten Analysemethoden, wird eine Aussage über eine festgestellte Verstopfung zuverlässiger, wie nachfolgend erläutert wird.

Die Wahrscheinlichkeit einer Verstopfung bei einer festgestellten Korrelation zwischen einer Änderung des Temperaturmesssignals und dem Differenzdruckmesssignal P(V|K) ist gegeben als:

$$P(V|K) = P(K|V)*P(V)/[P(K|V)*P(V)+ P(K|Frei)*P(Frei)] \qquad (2)$$

Hierbei sind: P(K|V) die Wahrscheinlichkeit, dass bei einer Verstopfung eine Korrelation zwischen der Änderung des Temperaturmesssignals und dem Differenzdruckmesssignal detektiert wird, P(V) die Wahrscheinlichkeit, dass eine Wirkdruckleitung verstopft, P(K|Frei) die Wahrscheinlichkeit, dass bei einer freien Wirkdruckleitung eine Korrelation zwischen der Änderung des Temperaturmesssignals und dem Differenzdruckmesssignal detektiert wird, und P(Frei) die Wahrscheinlichkeit, dass eine Wirkdruckleitung frei bleibt.

Geht man zum Zwecke der Erläuterung wieder davon aus, dass 2% aller Wirkdruckleitungen wegen Verstopfung ausfallen, wobei eine verstopfte Wirkdruckleitung mit einer Wahrscheinlichkeit von 90% zur Detektion einer Zunahme der Fluktuationen führt, und nimmt man weiterhin, dass eine freie Wirkdruckleitung mit einer Wahrscheinlichkeit von 10% zur Feststellung einer Korrelation zwischen der Änderung des Temperaturmesssignals und dem Differenzdruckmesssignal führen, dann beträgt die Wahrscheinlichkeit einer Verstopfung bei einer festgestellten Korrelation zwischen der Änderung des Temperaturmesssignals und dem Differenzdruckmesssignal P(V|F+) nach Gleichung 2 lediglich ein Sechstel. Isoliert betrachtet ist dieser Test schlechter als der Fluktuationstest. Aus der Kombination der beiden unabhängigen Tests ergibt sich aber ein erheblicher Gewinn an Zuverlässigkeit bei der Feststellung einer Verstopfung.

Geht man beispielsweise von einem positiven Ergebnis beim zweiten Test aus, so liegt eine Verstopfung einer Wirkdruckleitung mit einer Wahrscheinlichkeit von P(V)=1/6 vor. Setzt man diese Wahrscheinlichkeit P(V) = 1/6 nun als Anfangswahrscheinlichkeit für eine Verstopfung in die Betrachtung der Signifikanz der unabhängige Fluktuationsanalyse für eine Verstopfung so gilt nach Gleichung 1 mit ansonsten unveränderten Annahmen:

$$P(V|F+) = P(F+|V)*P(V)/[P(F+|V)*P(V)+P(F+|Frei)*P(Frei)]$$

$$= 99\% * 1/6 / [99\% * 1/6 + 4\% * 5/6]$$

$$\approx 5/6$$

Durch die Kombination der beiden Tests wäre also bei Gültigkeit der angenommenen Randbedingungen die Zuverlässigkeit einer Feststellung einer Verstopfung von 1/3 auf 5/6 gestiegen. Das wäre eine Verbesserung der Vorhersagequalität um das Zweieinhalbfache, wenngleich der zweite Test an sich sogar als weniger zuverlässig angenommen wurde als der erste Test.

Die Indizien für eine Verstopfung anhand der beiden Analysen können folgendermaßen zusammengefasst werden:

- Bildet sich eine Verstopfung der hochdruckseitigen Wirkdruckleitung 25, nimmt die Fluktuation des Differenzdruckmesssignals zu, und die Korrelation des Differenzdruckmesssignals mit Änderungen des Temperaturmesswerts geht gegen +1.
- Bildet sich eine Verstopfung der niederdruckseitigen Wirkdruckleitung 26, nimmt die Fluktuation des Differenzdruckmesssignals zu, und die Korrelation des Differenzdruckmesssignals mit Änderungen des Temperaturmesswerts geht gegen -1.
- Sind beide Wirkdruckleitungen offen, ist eine unveränderte Fluktuation des Differenzdruckmesssignals zu erwarten, und die Korrelation des Differenzdruckmesssignals mit Änderungen des Temperaturmesswerts geht gegen null.
- Bildet sich eine Verstopfung in beiden Wirkdruckleitungen, so ist eine abnehmende Fluktuation des Differenzdruckmesssignals zu erwarten, und die Korrelation des Differenzdruckmesssignals mit Änderungen des Temperaturmesswerts geht gegen null.

Im laufenden Messbetrieb können periodisch die beiden diskutierten Diagnoseroutinen auf Fluktuationen des Differenzdruckmesssignals und auf Korrelationen zwischen Temperaturänderungen und dem Differenzdruckmessignal durchgeführt werden, wobei in Abhängigkeit der in der ersten und zweiten Spalte angegebenen Befunde der in der dritten Spalte angegebene Zustand festgestellt und signalisiert wird.

| Fluktuation dP | Korrelation dP und T | Zustand |
|---|---|---|
| Erhöht | 1 | Hochdruckseitige Wirkdruckleitung (p+) verstopft |
| Erhöht | -1 | Niederdruckseitige Wirkdruckleitung (p-) verstopft |
| Normal | 0 | Beide Wirkdruckleitungen offen |
| Geringer | 0 | Beide Wirkdruckleitungen verstopft |

**Patentansprüche**

1. Durchflussmessanordnung, welche eine Differenzdruckmessanordnung aufweist, wobei die Differenzdruckmessanordnung umfasst:

   einen Differenzdruckmesswandler (10) zum Erfassen der Differenz zwischen einem ersten Mediendruck und einem zweiten Mediendruck eines Mediums und zum Bereitstellen eines Differenzdruckmesssignals welches von der Differenz zwischen dem ersten Mediendruck und dem zweiten Mediendruck abhängt;
   einen von dem Medium durchströmten Wirkdruckgeber (20) mit einem ersten hochdruckseitigen Druckabgriffskanal (23) und einem zweiten niederdruckseitigen Druckabgriffskanal (24),
   eine erste Wirkdruckleitung (25), welche an einen ersten Druckeingang (12) des Differenzdruckmesswandlers (10) und an den ersten Druckabgriffkanal angeschlossen ist, umso mittels des Mediums den Differenzdruckmesswandler mit dem ersten Mediendruck zu beaufschlagen;
   eine zweite Wirkdruckleitung (26), welche an einen zweiten Druckeingang (13) des Differenzdruckmesswandlers (10) und an den zweiten Druckabgriffkanal angeschlossen ist, umso mittels des Mediums den Differenzdruckmesswandler mit dem zweiten Mediendruck zu beaufschlagen;
   mindestens einen Temperatursensor (30) zum Ausgeben eines Temperatursignals welches mit einer Temperatur der Wirkdruckleitungen korreliert (25 26); und
   eine Verarbeitungseinheit (14) zum Verarbeiten des Differenzdruckmesssignals und des Temperatursignals;
   wobei die Verarbeitungseinheit dazu eingerichtet ist, anhand des Differenzdruckmesssignals und des Temperatursignals eine signifikante Korrelation zwischen einer Veränderung des Temperatursignals und dem Differenzdrucksignal festzustellen, und die Feststellung einer signifikanten Korrelation als Hinweis auf eine verstopfte Wirkdruckleitung zu werten,
   wobei die Auswerteeinrichtung dazu eingerichtet ist, eine positive Korrelation zwischen einer Temperatursignaländerung einerseits, die einem Temperaturanstieg entspricht, und dem Differenzdrucksignal andererseits, als Indiz für eine Verstopfung der ersten Wirkdruckleitung zu werten,
   wobei die Auswertungseinheit weiterhin dazu eingerichtet ist, zumindest einen charakteristischen Parameter eines Rauschens oder einer Fluktuation des Differenzdruckmesssignals zu ermitteln, und diesen Parameter bei der Feststellung einer verstopften Wirkdruckleitung zu berücksichtigen,
   wobei die Differenz zwischen dem ersten Mediendruck und dem zweiten Mediendruck ein Maß für den Durchfluss ist, wobei die Auswertungseinheit weiterhin dazu eingerichtet ist, eine Korrelation zwischen dem charakteristischen Parameter eines Rauschens bzw. einer Fluktuation und dem Durchfluss bzw. der Amplitude des Differenzdruckmesssignals bei der Feststellung einer verstopften Wirkdruckleitung zu berücksichtigen.

2. Durchflussmessanordnung nach Anspruch 1, wobei die Auswerteeinrichtung dazu eingerichtet ist, eine negative Korrelation zwischen einer Temperatursignaländerung einerseits, die einem Temperaturanstieg entspricht, und dem Differenzdrucksignal andererseits, als Indiz für eine Verstopfung der zweiten Wirkdruckleitung zu werten.

3. Verfahren zum Überwachen einer Durchflussmessanordnung, welche eine Differenzdruckmessanordnung aufweist, insbesondere nach einem der vorhergehenden Ansprüche, wobei die Differenzdruckmessanordnung einen Differenzdruckmesswandler zum Erfassen einer Differenz zwischen einem ersten Mediendruck und einem zweiten Mediendruck eines Mediums und zum Bereitstellen eines Differenzdruckmesssignals welches von der Differenz zwischen dem ersten Mediendruck und dem zweiten Mediendruck abhängt; einen von dem Medium durchströmten Wirkdruckgeber (20) mit einem ersten hochdruckseitigen Druckabgriffskanal (23) und einem zweiten niederdruckseitigen Druckabgriffskanal (24), eine erste Wirkdruckleitung, welche an einen ersten Druckeingang des Differenzdruckmesswandlers und an den ersten Druckabgriffkanal (23) angeschlossen ist, umso mittels des Mediums den Differenzdruckmesswandler mit dem ersten Mediendruck zu beaufschlagen; eine zweite Wirkdruckleitung, welche an einen zweiten Druckeingang des Differenzdruckmesswandlers und an den zweiten Druckabgriffkanal (24) angeschlossen ist, umso mittels des Mediums den Differenzdruckmesswandler mit dem zweiten Mediendruck zu beaufschlagen, wobei die Differenz zwischen dem ersten Mediendruck und dem zweiten Mediendruck ein Maß für den Durchfluss ist; und mindestens einen Temperatursensor zum Ausgeben eines Temperatursignals, welches mit einer Temperatur der Wirkdruckleitungen korreliert, aufweist,
   wobei das Verfahren umfasst:

   zumindest zeitweises Erfassen eines zeitlichen Verlaufs des Temperatursignals und des Differenzdruckmesssignals,
   Überprüfen, ob eine signifikante Korrelation zwischen einer Veränderung des Temperatursignals und dem Differenzdrucksignal festzustellen ist, die als Hinweis auf eine verstopfte Wirkdruckleitung zu werten ist, wobei das Verfahren weiterhin eine Analyse eines Rauchens oder einer Fluktuation des Differenzdruckmesssignals umfasst, und die Überprüfung ob das Rauschen oder die Fluktuation auf eine verstopfte Wirkdruckleitung hinweisen, wobei eine verstopfte Wirkdruckleitung signalisiert wird, wenn das Rauschen oder die Fluktuation auf eine verstopfte Wirkdruckleitung hinweisen, wobei anhand einer signifikanten Korrelation zwischen einer Veränderung des Temperatursignals und dem Differenzdrucksignal, identifiziert wird, welche Wirkdruckleitung verstopft ist.

## Claims

1.  Flow measuring arrangement, which has a differential pressure measuring arrangement, wherein the differential pressure measuring arrangement comprises:

    a differential pressure transducer (10) designed to record the difference between a first fluid pressure and a second fluid pressure of a fluid, and designed to provide a differential pressure measuring signal that depends on the difference between the first fluid pressure et la second fluid pressure;
    a differential pressure sensor (20), through which the fluid flows, said sensor comprising a first pressure tapping channel (23) on the high-pressure side and a second pressure tapping channel (24) on the low-pressure side,
    a first differential pressure line (25), which is connected to a first pressure input (12) of the differential pressure transducer (10) and to the first pressure tapping channel in order to apply the first fluid pressure to the differential pressure transducer via the fluid;
    a second differential pressure line (26), which is connected to a second pressure input (13) of the differential pressure transducer (10) and to the second pressure tapping channel in order to apply the second fluid pressure to the differential pressure transducer via the fluid;
    at least one temperature sensor (30) which is designed to output a temperature signal, said signal correlating to a temperature of the differential pressure lines (25, 26); and
    a processing unit (14) designed to process the differential pressure measuring signal and the temperature signal;
    wherein the processing unit is configured to use the differential pressure measuring signal and the temperature signal to determine a significant correlation between a change in the temperature signal and the differential pressure signal, and to interpret the occurrence of a significant correlation as an indication of a blocked differential pressure line,
    wherein the evaluation unit is configured to interpret a positive correlation between a change in the temperature signal, on the one hand, which corresponds to a temperature increase, and the differential pressure signal, on the other hand, as an indication of a blockage in the first differential pressure line,
    wherein the evaluation unit is further configured to determine at least one characteristic parameter of a noise or a fluctuation of the differential pressure measuring signal and to take this parameter into consideration when determining a blockage in the differential pressure line,
    wherein the difference between the first fluid pressure and the second fluid pressure is a measure for the flow,
    wherein the evaluation unit is further configured to take into consideration a correlation between the characteristic parameter of a noise or a fluctuation and the flow or the amplitude of the differential pressure measuring signal when determining a blockage in the differential pressure line.

2.  Flow measuring arrangement as claimed in Claim 1, wherein the evaluation unit is configured to interpret a negative correlation between a change in the temperature signal, on the one hand, which corresponds to a temperature increase, and the differential pressure signal, on the other hand, as an indication of a blockage in the second differential pressure line.

3.  Procedure for monitoring a flow measuring arrangement, which has a differential pressure measuring arrangement, particularly as claimed in one of the previous claims,
    wherein the differential pressure measuring arrangement comprises a differential pressure transducer designed to measure a difference between a first fluid pressure and a second fluid pressure of a fluid, and to provide a differential pressure measuring signal, wherein said signal depends on the difference between the first fluid pressure and the second fluid pressure;
    a differential pressure sensor (20), through which the fluid flows, said sensor featuring a first pressure tapping channel (23) on the high-pressure side and a second pressure tapping channel (24) on the low-pressure side,
    a first differential pressure line, which is connected to a first pressure input of the differential pressure transducer and to the first pressure tapping channel (23), in order to apply the first fluid pressure to the differential pressure transducer via the fluid;

EP 3 044 559 B1

a second differential pressure line, which is connected to a second pressure input of the differential pressure transducer and to the second pressure tapping channel (24), in order to apply the second fluid pressure to the differential pressure transducer via the fluid,

wherein the difference between the first fluid pressure and the second fluid pressure is a measure for the flow;

and at least a temperature sensor designed to output a temperature signal, which correlates to a temperature of the differential pressure lines,

wherein said procedure comprises:

at least the intermittent recording of the development of the temperature signal and of the differential pressure measuring signal over time,

a check to determine whether a significant correlation can be determined between a change in the temperature signal and the differential pressure signal which is interpreted as an indication of a blocked differential pressure line,

wherein the procedure further comprises an analysis of a noise or of a fluctuation in the differential pressure measuring signal, and the check to determine whether the noise or the fluctuation is an indication of a blocked differential pressure line,

wherein a blocked differential pressure line is signaled if the noise or the fluctuation indicate a blocked differential pressure line,

wherein a significant correlation between a change in the temperature signal and the differential pressure signal is used to determine which differential pressure line is blocked.


**Revendications**

1. Dispositif de mesure de débit, lequel comprend un dispositif de mesure de pression différentielle, le dispositif de mesure de pression différentielle comprenant :

un convertisseur de mesure de pression différentielle (10) destiné à mesurer la différence entre une première pression et une deuxième pression d'un produit, et destiné à mettre à disposition un signal de mesure de pression différentielle, lequel signal dépend de la différence entre la première pression de produit et la deuxième pression de produit ;

un capteur de pression différentielle (20) parcouru par le produit, lequel capteur comprend un premier canal de prélèvement de pression (23) côté haute pression et un deuxième canal de prélèvement de pression (24) côté basse pression, une première conduite de pression différentielle (25), laquelle est raccordée à une première entrée de pression (12) du convertisseur de mesure de pression différentielle (10) et au premier canal de prélèvement de pression, afin d'alimenter, au moyen du produit, le convertisseur de mesure de pression différentielle avec la première pression de produit ;

une deuxième conduite de pression différentielle (26), laquelle est raccordée à une deuxième entrée de pression (13) du convertisseur de mesure de pression différentielle (10) et au deuxième canal de prélèvement de pression, afin d'alimenter, au moyen du produit, le convertisseur de mesure de pression différentielle avec la deuxième pression de produit ;

au moins un capteur de température (30) destiné à émettre un signal de température, lequel signal est corrélé avec une température des conduites de pression différentielle (25, 26) ; et

une unité de traitement (14) destinée au traitement du signal de mesure de pression différentielle et du signal de température ;

l'unité de traitement étant configurée en vue de déterminer, au moyen du signal de mesure de pression différentielle et du signal de température, une corrélation significative entre un changement du signal de température et du signal de pression différentielle, et en vue d'interpréter la constatation d'une corrélation significative comme indicateur d'une conduite de pression différentielle obstruée,

l'unité d'évaluation étant configurée en vue d'interpréter une corrélation positive entre, d'une part, un changement du signal de température correspondant à une augmentation de température et, d'autre part, le signal de pression différentielle comme indicateur d'une obstruction de la première conduite de pression différentielle,

l'unité d'évaluation étant en outre configurée en vue de déterminer au moins un paramètre caractéristique d'un bruit ou d'une fluctuation du signal de mesure de pression différentielle, et de prendre en compte ce paramètre pour la constatation d'une conduite de pression différentielle obstruée,

la différence entre la première pression de produit et la deuxième pression de produit constituant une mesure du débit, l'unité d'évaluation étant en outre configurée afin de tenir compte d'une corrélation entre le paramètre caractéristique d'un bruit ou d'une fluctuation et le débit ou l'amplitude du signal de mesure de pression différentielle pour la constatation d'une conduite de pression différentielle obstruée.

2. Dispositif de mesure de débit selon la revendication 1, pour lequel l'unité d'évaluation est configurée en vue d'interpréter une corrélation négative entre, d'une part, un changement du signal de température correspondant à une augmentation de température et, d'autre part, le signal de pression différentielle comme indicateur d'une obstruction de la deuxième conduite de pression différentielle.

3. Procédé destiné à la surveillance d'un dispositif de mesure de débit, lequel comprend un dispositif de mesure de pression différentielle, notamment selon l'une des revendications précédentes,
pour lequel le dispositif de mesure de pression différentielle comprend un convertisseur de mesure de pression différentielle destiné à mesurer une différence entre une première pression et une deuxième pression d'un produit, et destiné à mettre à disposition un signal de mesure de pression différentielle, lequel signal dépend de la différence entre la première pression de produit et la deuxième pression de produit ;
un capteur de pression différentielle (20) parcouru par le produit, lequel capteur comprend un premier canal de prélèvement de pression (23) côté haute pression et un deuxième canal de prélèvement de pression (24) côté basse pression, une première conduite de pression différentielle, laquelle est raccordée à une première entrée de pression du convertisseur de mesure de pression différentielle et au premier canal de prélèvement de pression (23), afin d'alimenter, au moyen du produit, le convertisseur de mesure de pression différentielle avec la première pression de produit ;
une deuxième conduite de pression différentielle, laquelle est raccordée à une deuxième entrée de pression du convertisseur de mesure de pression différentielle et au deuxième canal de prélèvement de pression (24), afin d'alimenter, au moyen du produit, le convertisseur de mesure de pression différentielle avec la deuxième pression de produit,
la différence entre la première pression de produit et la deuxième pression de produit constituant une mesure du débit ;
et au moins un capteur de température destiné à émettre un signal de température, lequel signal est corrélé avec une température des conduites de pression différentielle,
le procédé comprenant :

au moins une mesure par intermittence d'un déroulement temporel du signal de température et du signal de mesure de pression différentielle,
la vérification si une corrélation significative entre un changement du signal de température et le signal de pression différentielle peut être constatée, laquelle corrélation est à interpréter comme indicateur d'une conduite de pression différentielle obstruée,
le procédé comprenant en outre une analyse d'un bruit ou d'une fluctuation du signal de mesure de pression différentielle, et la vérification si le bruit ou la fluctuation est le signe d'une conduite de pression différentielle obstruée, une corrélation significative entre un changement du signal de température et le signal de pression différentielle permettant d'identifier quelle conduite de pression différentielle est obstruée.

EP 3 044 559 B1

**Fig. 1**

**IN DER BESCHREIBUNG AUFGEFÜHRTE DOKUMENTE**

**In der Beschreibung aufgeführte Patentdokumente**

- EP 1840549 B1
- US 7918134 B2
- US 8055479 B2